# EUROPÄISCHE PATENTSCHRIFT

(11) **EP 2 774 258 B1**
(45) Veröffentlichungstag und Bekanntmachung des Hinweises auf die Patenterteilung: **18.03.2020**
(21) Anmeldenummer: 12787013.7
(22) Anmeldetag: 16.11.2012
(51) Int. Cl.: H02M 1/44, H02M 3/158, H02M 7/48, H02M 7/5387, H02M 1/32, H02M 1/00

(54) **STROMRICHTERSCHALTUNG**
POWER CONVERTER
CIRCUIT CONVERTISSEUR

(30) Priorität: 19.12.2011 EP 11194180
(43) Veröffentlichungstag der Anmeldung: 10.09.2014
(73) Patentinhaber: Valeo Siemens eAutomotive Germany GmbH, 91056 Erlangen (DE)
(72) Erfinder: BÄUERLEIN, Frank, 92353 Postbauer - Heng (DE)
(74) Vertreter: Dr. Gassner & Partner mbB
(86) Internationale Anmeldenummer: PCT/EP2012/072832
(87) Internationale Veröffentlichungsnummer: WO 2013/092038

(56) Entgegenhaltungen:
- EP-A2- 1 244 203
- EP-A2- 1 972 485
- WO-A2-03/090331
- DE-A1-102010 008 978
- US-A1- 2008 061 748
- LAMBERTZ LUKAS ET AL: "Modularer Hochfrequenz Umrichter fuer Fahrzeugantriebe", EMA 2010 - ELEKTROMOBILAUSSTELLUNG : FACHTAGUNG, WETTBEWERBE ; VORTRÄGE DER ETG-FACHTAGUNG VOM 8. BIS 9. OKTOBER 2010 IN ASCHAFFENBURG, BERLIN : VDE-VERLAG, 8. Oktober 2010 (2010-10-08), Seiten 47-53, XP009158854, ISBN: 978-3-8007-3311-8
- ANNA MAYER ET AL: "Control Concept of the Modular High Frequency Converter for VehicleApplications", PCIM EUROPE 2011, 17. Mai 2011 (2011-05-17), - 19. Mai 2011 (2011-05-19), Seiten 556-561, XP009159034, Nuremberg
- LAMBERTZ L ET AL: "Modular converter systems for vehicle applications", EMOBILITY - ELECTRICAL POWER TRAIN, 2010, IEEE, PISCATAWAY, NJ, USA, 8. November 2010 (2010-11-08), Seiten 1-6, XP031835669, ISBN: 978-1-4244-8410-2

## Beschreibung

Die Erfindung betrifft eine Stromrichterschaltung gemäß dem Oberbegriff des Anspruchs 1, einen Elektromotor mit der Stromrichterschaltung und ein Fahrzeug mit dem Elektromotor.

Eine Stromrichterschaltung zur elektrischen Energieversorgung der Motorwicklungen eines Elektromotors in einem Fahrzeugantrieb ist beispielsweise aus der Veröffentlichung A. Mayer et al., "Control concept of the Modular High Frequency - Converter for vehicle applications", PCIM Europe 2011, 2011 bekannt. Ähnliche Stromrichterschaltungen sind ferner auch in Lukas Lambertz et al, "Modularer Hochfrequenz Umrichter für Fahrzeugantriebe", EMA 2010, 08. bis 09. September 2010, Aschaffenburg sowie in DE 10 2010 008 978 A1 beschrieben.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, zwischen den in Reihe geschalteten Submodulen jeweils eine Induktivität zu verschalten.

Der Vorschlag geht davon aus, dass die Halbbrücke zur Regelung der elektrischen Leistungszufuhr des jeweiligen Submoduls und die Vollbrücke zur Erzeugung der Wechselspannung hohe transiente Ströme erzeugen kann, die über die elektrische Leistungsquelle geführt in einem geschlossenen Stromkreis durch die Stromrichterschaltung fließen und die elektromagnetische Verträglichkeit (EMV) der Stromrichterschaltung selbst oder anderer elektrischer Komponenten in der Nähe der Stromrichterschaltung beeinflussen können.

Dem Vorschlag liegt die Überlegung zugrunde, dass diese transienten Ströme durch Einführen zusätzlicher Induktivitäten zwischen den einzelnen Submodulen gering gehalten werden können, so dass die elektromagnetische Verträglichkeit der Stromrichterschaltung verbessert ist.

Die Erfindung gibt daher eine Stromrichterschaltung an, die wenigstens zwei Submodule in Reihenschaltung umfasst, die über eine erste Induktivität elektrische Leistung aus einer eine Gleichspannung abgebenden Leistungsquelle bezieht. Dabei weist jedes Submodul eingangsseitig eine einphasige Halbbrücke und lastseitig eine einphasige Vollbrücke auf. Ferner sind die Halbbrücke und die Vollbrücke gleichspannungsseitig zusammen mit einem Zwischenkreiskondensator parallelgeschaltet. Erfindungsgemäß ist in der angegebenen Stromrichterschaltung eine zweite Induktivität in Reihe zwischen dem ersten und zweiten Submodul geschaltet, wobei diese zweite Induktivität größer ist als die Induktivität einer Verbindungsleitung zwischen den beiden Submodulen.

Durch die zusätzliche Induktivität zwischen den beiden Submodulen werden transiente Ströme, die beispielsweise zu elektromagnetischen Abstrahlungen führen könnten, gedämpft, so dass sich diese transienten Ströme nicht eingangsseitig in der Stromrichterschaltung ausbreiten können. Die transienten Ströme werden somit lokal gehalten. Hierdurch werden die EMV-Eigenschaften der Schaltung verbessert.

In einer bevorzugten Weiterbildung ist die erste Induktivität eine Spule. Diese Spule kann durch die zusätzlich angeordnete Induktivität zwischen den beiden Submodulen kleiner dimensioniert werden, wodurch sich Bauraum und auch Kosten einsparen lassen.

In einer zusätzlichen Weiterbildung der Erfindung sind Verbindungskabel der Stromrichterschaltung zur elektrischen Leistungsquelle hin gegen die Abgabe elektromagnetischer Strahlung geschirmt. Durch die Erfindung lassen sich die Anforderungen an eine Schirmung reduzieren, wodurch sich Kosten und Bauraum der angegebenen Stromrichterschaltung weiter reduzieren lassen.

Die Erfindung gibt auch einen Elektromotor an, der eine erste Motorwicklung, eine zweite Motorwicklung und eine angegebene Stromrichterschaltung umfasst. Dabei sind lastseitig mit dem ersten Submodul die erste Motorwicklung und lastseitig mit dem zweiten Submodul die zweite Motorwicklung verschaltet.

Die Erfindung gibt auch ein Fahrzeug an, das ein Rad und einen angegebenen Elektromotor zum Antrieb des Rades umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: eine Schaltung mit einer beispielhaften Stromrichterschaltung, und
- FIG 2: ein beispielhaftes Submodul der Stromrichterschaltung zeigen.

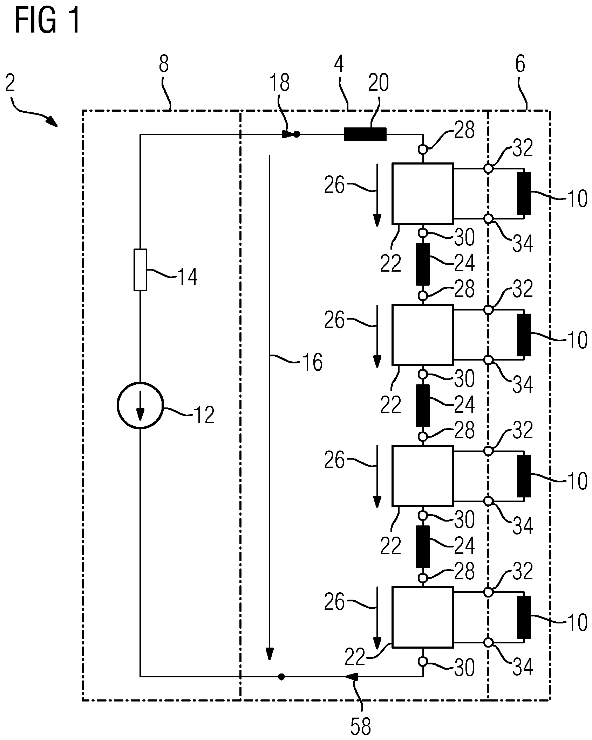

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist vier elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an den modularen Umrichter 4 einen Batteriestrom 18 ab. Die Batteriespannung 16 ist eine Gleichspannung, während der Batteriestrom 18 ein Gleichstrom ist.

Die Stromrichterschaltung 4 weist eingangsseitig eine Induktivität 20 auf, die beispielsweise eine Drossel sein kann. Es ist jedoch auch möglich, dass diese Induktivität 20 allein durch die Verbindungsleitung zur Batterie 8 realisiert wird. An diese Induktivität 20 schließt sich in Reihe eine Reihenschaltung aus vier noch zu beschreibenden Submodulen 22 an, zwischen denen jeweils eine Zusatzinduktivität 24 verschaltet ist. An den einzelnen Submodulen 22 fällt jeweils eine Teilspannung 26 ab. Ferner ist an jedes Submodul 22 jeweils eine elektrische Last 10 angeschlossen. Basierend auf den Teilspannungen 26 versorgen die Submodule 22 auf diese Weise die elektrischen Lasten 10 mit elektrischer Energie in einer noch zu beschreibenden Weise. Für die Anzahl der Submodule 22 und elektrischen Lasten 10 wurde in der vorliegenden Ausführung vier gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 26.

Jedes Submodul 22 weist eine erste Eingangsklemme 28, eine zweite Eingangsklemme 30, eine erste Ausgangsklemme 32 und eine zweite Ausgangsklemme 34 auf. Während über den ersten und zweiten Eingangsklemmen 28, 30 jeweils die Teilspannungen 26 abfallen, sind an die ersten und zweiten Ausgangsklemmen 32, 34 die elektrischen Lasten 10 angeschlossen.

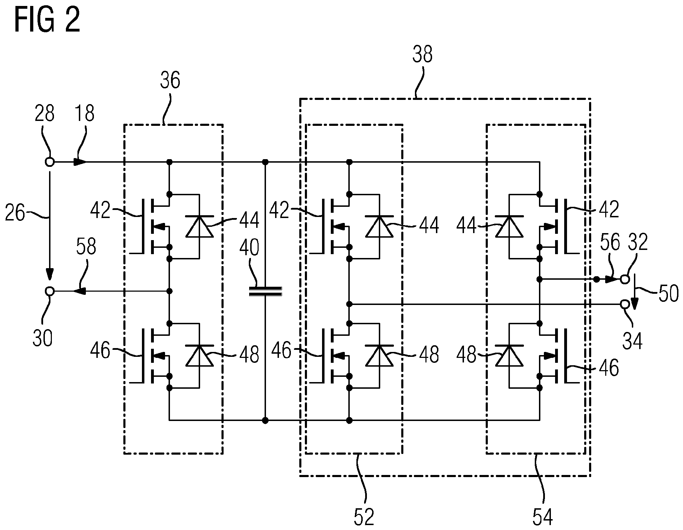

Es wird auf FIG 2 Bezug genommen, die beispielhaft den Aufbau eines der Submodule 22 in der Stromrichterschaltung 2 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 36, eine Vollbrücke 38 und einen Zwischenkreiskondensator 40 auf, die alle miteinander parallel verschaltet sind.

Die Eingangshalbbrücke 36 weist in einem ersten Brückenarm einen ersten Schalter 42 und eine dazu antiparallel geschaltete erste Freilaufdiode 44 sowie in einem zweiten Brückenarm einen zum ersten Schalter 42 in Reihe geschalteten zweiten Schalter 46 und eine dazu parallel geschaltete zweite Freilaufdiode 48 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 44, 48 auch weggelassen werden.

Die Teilspannung 26 ist an den ersten Schalter 42 angelegt, während der zweite Schalter 46 in Reihe zwischen dem ersten Schalter 42 und der Vollbrücke 38 geschaltet ist. Somit kann der erste Schalter 42 aus Sicht der Vollbrücke 38 den Eingang aus der Batterie 8 kurzschließen, während der zweite Schalter 46 (bei geöffneten ersten Schalter 42) die Vollbrücke 38 in den Strompfad der Batterie 8 legen kann. Werden in jedem Submodul 22 die Schalter 42, 46 in gleicher Weise abwechselnd geöffnet und geschlossen, ist gemeinsam mit der Induktivität 20 sowie den Zusatzinduktivitäten 24 ein Hochsetzsteller geschaffen, der die Summe aller an den Submodulen 22 abfallenden Teilspannungen 26 höher setzt, als die Batteriespannung 16. Weiterhin kann durch die Eingangshalbbrücke 36 die Vollbrücke 38 auch dauerhaft aus der Reihenschaltung der vier Submodule 22 entfernt werden, wenn der erste Schalter 42 dauerhaft geschlossen bleibt.

Der Vollbrücke 38 ist zum Wechselrichten der am Eingang 28, 30 des Submoduls 22 abfallenden Teilspannung 26, in eine Wechselspannung 50 am Ausgang 32, 34 des Submoduls 22 vorgesehen. Dazu weist die Vollbrücke 38 zwei Wechselrichterhalbbrücken 52, 54 auf, die die gleichen Elemente, wie die Eingangshalbbrücke 40 aufweisen. Die Eingangshalbbrücke 40 und die beiden Wechselrichterhalbbrücken 52, 54 der Vollbrücke 42 sind parallel miteinander verschaltet. An einem Brückenzweig der Vollbrücke 42 kann die Wechselspannung 50 abgegriffen werden. Entsprechend wird an die elektrische Last 10 ein Wechselstrom 56 abgegeben. Die Vollbrücke 38 ist als Vierquadrantensteller aufgebaut. Deshalb sind im Unterschied zur Eingangshalbbrücke 38 alle Freilaufdioden 44, 48 antiparallel zu ihren jeweiligen Schaltern 42, 46 geschaltet.

Durch den Betrieb der Eingangshalbbrücke 36 sowie der Vollbrücke 38 werden transiente Ströme 58 erzeugt, deren Stromkreis zum Teil über die Batterie 8 geschlossen wird. Die Leiterbahnen zwischen den Submodulen 22 und der Batterie 8 wirken wie Antennen und geben basierend auf den transienten Strömen 58 elektromagnetische Strahlung ab, die elektronische Geräte wie eine nicht gezeigte Steuervorrichtung zur Steuerung des Betriebs der Stromrichterschaltung 4 oder weitere Geräte im Fahrzeug beeinträchtigen könnte.

Die Zusatzinduktivitäten 24 dämpfen die transienten Ströme 58 nach Austritt aus einem Submodul 22 und erlauben es, die Schirmung mit weniger Aufwand auszuführen. Zugleich erhöhen die Zusatzinduktivitäten 24 die Gesamtinduktivität der Schaltung, so dass die eigentliche Induktivität 20 zur Realisierung der Hochsetzstellerfunktion kleiner ausgelegt werden kann.

## Patentansprüche

1. Stromrichterschaltung (4), umfassend wenigstens zwei Submodule (22) in Reihenschaltung, die über eine erste Induktivität (20) elektrische Leistung aus einer eine Gleichspannung (18) abgebenden Leistungsquelle (8) bezieht,
- wobei jedes Submodul (22) eine erste Eingangsklemme (28) und eine zweite Eingangsklemme (30) sowie eingangsseitig eine einphasige Halbbrücke (36) und lastseitig eine einphasige Vollbrücke (38) aufweist, und
- wobei die Halbbrücke (36) und die Vollbrücke (38) gleichspannungsseitig zusammen mit einem Zwischenkreiskondensator (40) parallelgeschaltet sind,
**gekennzeichnet durch**
- eine zweite Induktivität (24), die die zweite Eingangsklemme (28) eines ersten Submoduls (22) mit der ersten Eingangsklemme (30) eines zweiten Submoduls (22) verbindet und die größer ist als die Induktivität einer Verbindungsleitung zwischen den beiden Submodulen (22).

2. Stromrichterschaltung (4) nach Anspruch 1, **dadurch gekennzeichnet, dass** die erste Induktivität (20) eine Spule ist.

3. Stromrichterschaltung (4) nach einem der vorstehenden Ansprüche **dadurch gekennzeichnet, dass** Verbindungskabel zur elektrischen Leistungsquelle (8) gegen die Abgabe elektromagnetischer Strahlung geschirmt sind.

4. Elektromotor umfassend eine erste Motorwicklung, eine zweite Motorwicklung und eine Stromrichterschaltung nach einem der vorstehenden Ansprüche, wobei lastseitig mit dem ersten Submodul (22) die erste Motorwicklung und lastseitig mit dem zweiten Submodul (22) die zweite Motorwicklung verschaltet ist.

5. Fahrzeug umfassend ein Rad und einen Elektromotor nach Anspruch 4 zum Antrieb des Rades.

## Claims

1. A power converter circuit (4) comprising at least two submodules (22) connected in series, which receives electrical power via a first inductor (20) from a power source (8) emitting a direct voltage (18),
- wherein each submodule (22) comprises a first input terminal (28) and a second input terminal (30) as well as a single-phase half-bridge (36) on the input side and a single-phase full bridge (38) on the load side, and
- wherein, on the DC voltage side, the half-bridge (36) and the full bridge (38), together with an intermediate circuit capacitor (40), are connected in parallel,
**characterized by**
a second inductance (24) which connects the second input terminal (28) of a first submodule (22) to the first input terminal (30) of a second submodule (22) and which is greater than the inductance of a connecting line between the two submodules (22).

2. The power converter (4) according to claim 1, **characterized in that** the first inductance (20) is a coil.

3. The power converter (4) according to one of the preceding claims, **characterized in that** connecting cables to the electrical power source (8) are shielded against the emission of electromagnetic radiation.

4. An electric motor comprising a first motor winding, a second motor winding and a power converter according to one of the preceding claims, the first motor winding, on the load side, being connected to the first submodule (22), and the second motor winding, on the load side, being connected to the second submodule (22).

5. A vehicle comprising a wheel and an electric motor according to claim 4 for driving the wheel.

## Revendications

1. Circuit convertisseur (4), comportant au moins deux sous-modules (22) montés en série, qui prélève par l'intermédiaire d'une première inductance (20) de la puissance électrique à partir d'une source de puissance (8) délivrant une tension continue (18),
- en ce que chaque sous-module (22) comporte une première borne d'entrée (28) et une seconde borne d'entrée (30) ainsi que côté entrée un demi-pont monophasé (36) et côté charge un pont intégral monophasé (38), et
- en ce que le demi-pont (36) et le pont intégral (38) sont montés en parallèle côté tension continue en association avec un condensateur de circuit intermédiaire (40),
**caractérisé par**
- une seconde inductance (24) qui relie la seconde borne d'entrée (28) d'un premier sous-module (22) à la première borne d'entrée (30) d'un second sous-module (22) et qui est supérieure à l'inductance d'une ligne de raccordement entre les deux sous-modules (22).

2. Circuit convertisseur (4) selon la revendication 1, **caractérisé en ce que** la première inductance (20) est une bobine.

3. Circuit convertisseur (4) selon l'une des revendications précédentes, **caractérisé en ce que** des câbles de connexion vers la source de puissance électrique (8) sont blindés contre l'émission de rayonnement électromagnétique.

4. Moteur électrique comportant un premier enroulement moteur, un second enroulement moteur et un circuit convertisseur selon l'une des revendications précédentes, en ce que le premier enroulement moteur est connecté côté charge au premier sous-module (22) et le second enroulement moteur est connecté côté charge au second sous-module (22).

5. Véhicule comportant une roue et un moteur électrique selon la revendication 4 servant à l'entraînement de la roue.
